# EUROPEAN PATENT SPECIFICATION

(11) **EP 3 657 853 B1**
(45) Date of publication and mention of the grant of the patent: **04.10.2023**
(21) Application number: 19194367.9
(22) Date of filing: 16.07.2015
(51) Int. Cl.: H04W 28/20, H04W 24/02, H04W 80/02

(54) **METHOD, APPARATUS, AND SYSTEM FOR TRANSMITTING DATA THAT CARRIES INDICATION INFORMATION**
VERFAHREN, VORRICHTUNG UND SYSTEM ZUR ÜBERTRAGUNG VON DATEN, DIE INDIKATIONSINFORMATIONEN TRAGEN
PROCÉDÉ, APPAREIL ET SYSTÈME DE TRANSMISSION DE DONNÉES PORTANT DES INFORMATIONS D'INDICATION

(43) Date of publication of application: 27.05.2020
(62) Divisional of application: 15898033.4
(73) Proprietor: Huawei Technologies Co., Ltd., Longgang District Shenzhen, Guangdong 518129 (CN)
(72) Inventor: GAN, Ming, Shenzhen, Guangdong 518129 (CN); LIU, Le, Shenzhen, Guangdong 518129 (CN); LI, Yunbo, Shenzhen, Guangdong 518129 (CN)
(74) Representative: Epping - Hermann - Fischer

(56) References cited:
- EP-A1- 2 547 063
- WO-A1-2015/074237
- US-A1- 2011 255 401
- US-A1- 2012 207 036
- US-A1- 2014 205 029

## Description

### TECHNICAL FIELD

The present invention relates to wireless communications technologies, and in particular, to a method and a system for transmitting data that carries indication information, and an apparatus.

### BACKGROUND

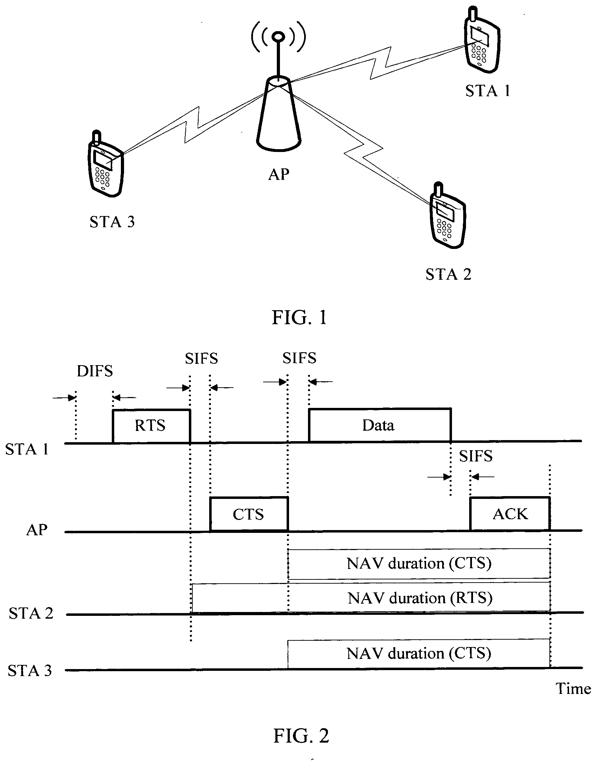

In a wireless local area network (Wireless Local Area Network, WLAN for short) system, a carrier sense mechanism is essential to a conflict-free operation. Specifically, physical carrier sense that logically exists at a physical (PHY) layer is responsible for detecting data transmission of other stations. However, in some cases, it is possible that not all stations can have their transmitted data be detected by means of physical carrier sense. In a network shown in FIG. 1, a BSS includes one access point (Access Point, AP for short) and three stations (Station, STA for short): a STA 1, a STA 2, and a STA 3. For example, data transmitted by the STA 1 may be detected by the AP and the STA 2, and the remote STA 3 can detect data transmitted by the AP but cannot detect data transmitted by the STA 1. For the AP and the STA 1, the STA 3 is a hidden node. In this case, when the STA 1 sends a data frame to the AP, because the STA 3 cannot detect the data frame, the STA 3 incorrectly considers that a channel is in an idle state, and therefore starts to perform data frame transmission. This causes interference to the data frame transmission between the STA 1 and the AP.

In the prior art, to prevent data transmission from being affected by a hidden node, a request to send (Request To Send, RTS for short)/clear to send (Clear To Send, CTS for short) mechanism is put forward. FIG. 2 is used as an example. A lateral axis is a time axis. The STA 1 first sends an RTS frame, the AP returns a CTS frame after receiving the RTS frame. A "duration" field in the RTS frame carries a specified value of a network allocation vector (Network allocation vector, NAV for short). The NAV provides a virtual carrier sense mechanism to enhance physical carrier sense, so that when a station receives a frame that is not destined for the station, the station may set the NAV according to a "duration" field in the frame. That is, data is not transmitted in the time period, to reduce interference. Duration indicated by the specified value of the NAV is: responding time of the CTS frame plus time required for exchanging the next frame. The "duration" field in the CTS frame is set to: the "duration" field in the RTS frame minus a short interframe space (Short interframe space, SIFS for short) and the responding duration of the CTS frame. In this manner, the STA 3 in FIG. 1 receives the CTS frame, and sets its own NAV to delay for subsequent frame exchanges.

In a next-generation WLAN system, an orthogonal frequency division multiple access (Orthogonal Frequency Division Multiple Access, OFDMA for short) technology is introduced to the 802.1 1ax standard. Multiple users are allowed to simultaneously receive or send data on orthogonal subchannels. There are more available channel bandwidths compared with a previous WLAN system, including bandwidths of 20 megahertz (MHz), 40 MHz, 80 MHz, and 160 MHz. The 40 MHz bandwidth includes a primary 20 MHz channel and a secondary 20 MHz channel; the 80 MHz bandwidth includes a primary 20 MHz channel, a secondary 20 MHz channel, and a secondary 40 MHz channel; and the 160 MHz bandwidth includes a primary 20 MHz channel, a secondary 20 MHz channel, a secondary 40 MHz channel, and a secondary 80 MHz channel.

According to an existing RTS/CTS mechanism, bandwidth information needs to be exchanged, to improve robustness of a hidden node. Specifically, if a transmit end node indicates, by using an RTS frame, that the transmit end node can support dynamic bandwidth, and if a node that needs to return a CTS frame does not set an NAV for some channels or all channels in idle bandwidth carried in the RTS frame, and detects, by means of CCA, first idle bandwidth less than the bandwidth indicated in the RTS frame, the node may return the CTS frame only in the detected first idle bandwidth, and the node that sends the RTS frame sends, only in the first idle bandwidth after receiving the CTS, data to the node that responds with the CTS frame. If the transmit end node indicates, by using an RTS frame, that the transmit end node cannot support dynamic bandwidth, that is, supports only static bandwidth, the receive end node returns a CTS frame only when detecting that all channels in idle bandwidth indicated in the RTS frame are idle. As shown in FIG, 3, the 80 MHz bandwidth is used as an example. The AP replicates and transmits an RTS frame on every 20 MHz channel, and dynamic bandwidth is supported. The STA 1 replicates a CTS frame on four 20 MHz channels to report, to the AP, that an idle bandwidth is 80 MHz. The STA 2 transmits a CTS frame on one 20 MHz channel to report, to the AP, that an idle bandwidth is 20 MHz. The STA 3 replicates a CTS frame on four 20 MHz channels to report, to the AP, that an idle bandwidth is 80 MHz. BA (block acknowledgement) is an acknowledgement frame, and is used to confirm data sent by the transmit end node. However, this manner of reporting an available bandwidth requires excessively high overheads.

WO2015074237 discloses "media access control" and the MAC header. The document also discloses that "in 401, a transmitting STA transmits a Request carrying channel indication information on idle channels. Both a receiving STA1 and a receiving STA2 listens" and paragraphs [0167] which discloses that "STA1 transmits the Response carrying idle channel indication information". Paragraphs [0162] in WO2015074237 discloses that "The channel described herein is measured in basic channel units. In a typical example, the channel unit is 20 Mhz". Paragraphs [0171] discloses that "For example, if four channels 1, 2, 3 and 6 are requested in the channel request frame, and the receiving end is idle on channels 1, 3 and 6, then the bitmap may be 10100100 or 10110000".

EP2547063A1 discloses that "The transmitting STA performs channel detection by CCA on each channel of 20MHz on the current maximum working bandwidth before transmitting a channel subscription Resquest to send (RTS), the RTS transmitted by transmitting STA carriers indication information of available channels".

US 2012/207036 A1 discloses methods and apparatuses for indicating status of radio resources in a wireless network. A requesting device transmits a resource request on a first radio channel to a responding device. The resource request includes a request to reserve the first radio channel between the requesting device and the responding device. The responding device transmits a resource response on the first radio channel in response to the resource request. The resource response comprises status information indicative of status of at least one second radio channel not requested to be reserved by the requesting device.

US 2014/205029 A1 discloses a method for generating a PHY data unit for transmission via a communication channel, in which a modulation scheme is selected from a plurality of modulation schemes, information bits are encoded to generate encoded data using one or more encoders, and an interleaving parameter NCOL is selected using the selected modulation scheme. NCOL varies for different modulation schemes. The encoded data is interleaved, which includes entering the encoded data into NROW rows and reading the encoded data out in NCOL columns. The payload information of the PHY data unit is modulated according to the modulation scheme, and a plurality of OFDM symbols is formed based on the modulated payload information.

US 2011/255401 A1 discloses a basic service set (BSS) load management procedure and a quiet interval setup procedure in a wireless local area network (WLAN) system. The WLAN system uses a bonding channel, and an access point (AP) of the WLAN system provides BSS load information regarding a channel having a bandwidth less than or equal to a bandwidth of the bonding channel (e.g., each of channels of 20 MHz, 40 MHz, 60 MHz, and 80 MHz) to STAs of the WLAN system. The BSS load information may be specified by an extended BSS load element. The AP transmits the extended BSS load element to the STAs by including the BSS load information to a beacon frame or a probe response frame.

### SUMMARY

Embodiments of the present invention provide methods, a receive end node, a transmit end node, and a computer-readable storage medium according to the attached claims.

According to the method for transmitting data that carries indication information, and the apparatus provided in the embodiments of the present invention, the transmit end node generates the indication frame, and the indication frame carries the receiver address, the BSSID, and the flag bit, ensuring that the indication frame certainly includes the BSSID. After receiving the indication frame, another receive end node other than the receive end node corresponding to the receiver address of the indication frame may obtain the BSSID according to the indication frame, so as to determine whether the indication frame is from a BSS to which the another receive end node belongs, and further determine whether data sending needs to be stopped in a specific time period. That is, not all receive end nodes other than the receive end node corresponding to the receiver address of the indication frame need to stop data sending after properly receiving the indication frame. Some receive end nodes may further determine, with reference to a CCA detection result, whether to continue to send data.

### BRIEF DESCRIPTION OF DRAWINGS

To describe the technical solutions in the embodiments of the present invention or in the prior art more clearly, the following briefly describes the accompanying drawings required for describing the embodiments or the prior art. Apparently, the accompanying drawings in the following description show some embodiments of the present invention, and a person of ordinary skill in the art may still derive other drawings from these accompanying drawings without creative efforts.
FIG. 1 is a schematic diagram of an architecture of a WLAN network;
FIG. 2 is a schematic diagram of an RTS/CTS exchange time sequence in a WLAN network in the prior art;

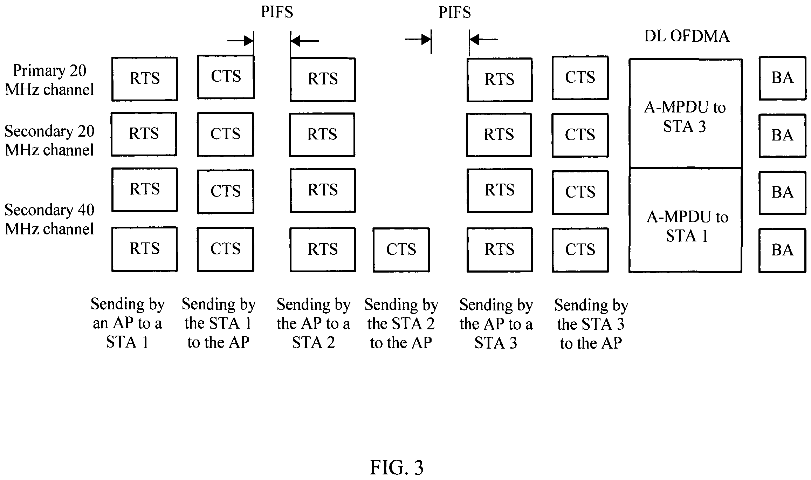

FIG. 3 is a schematic diagram of another RTS/CTS exchange time sequence in a WLAN network in the prior art;
FIG. 4 is a schematic flowchart of Embodiment 1 of a method for transmitting data that carries indication information according to the present invention;
FIG. 5 is a schematic structural diagram of a scrambler in a method for transmitting data that carries indication information according to the present invention;
FIG. 6 is a schematic structural diagram of a CTS frame in a method for transmitting data that carries indication information according to the present invention;
FIG. 7 is a schematic structural diagram of another CTS frame in a method for transmitting data that carries indication information according to the present invention;
FIG. 8 is a schematic structural diagram of a MAC frame in a method for transmitting data that carries indication information according to the present invention;
FIG. 9 is a schematic structural diagram of another CTS frame in a method for transmitting data that carries indication information according to the present invention;
FIG. 10 is a schematic flowchart of Embodiment 2 of a method for transmitting data that carries indication information according to the present invention;
FIG. 11 is a schematic structural diagram of a service field in a method for transmitting data that carries indication information according to the present invention;
FIG. 12 is a schematic structural diagram of a service field and a preamble in a method for transmitting data that carries indication information according to the present invention;
FIG. 13 is a schematic structural diagram of an RTS frame in a method for transmitting data that carries indication information according to the present invention;
FIG. 14 is a schematic flowchart of Embodiment 3 of a method for transmitting data that carries indication information according to the present invention;
FIG. 15 is a schematic structural diagram of another CTS frame in a method for transmitting data that carries indication information according to the present invention;
FIG. 16 is a schematic flowchart of Embodiment 4 of a method for transmitting data that carries indication information according to the present invention;
FIG. 17 is a schematic structural diagram of Embodiment 1 of a transmit end node according to the present invention;
FIG. 18 is a schematic structural diagram of Embodiment 2 of a transmit end node according to the present invention;
FIG. 19 is a schematic structural diagram of Embodiment 1 of a receive end node according to the present invention;
FIG. 20 is a schematic structural diagram of Embodiment 3 of a transmit end node according to the present invention;
FIG. 21 is a schematic structural diagram of Embodiment 2 of a receive end node according to the present invention;
FIG. 22 is a schematic structural diagram of Embodiment 4 of a transmit end node according to the present invention;
FIG. 23 is a schematic structural diagram of Embodiment 3 of a receive end node according to the present invention;
FIG. 24 is a schematic structural diagram of Embodiment 5 of a transmit end node according to the present invention; and
FIG. 25 is a schematic structural diagram of Embodiment 4 of a receive end node according to the present invention.

### DESCRIPTION OF EMBODIMENTS

To make the objectives, technical solutions, and advantages of the embodiments of the present invention clearer, the following clearly and completely describes the technical solutions in the embodiments of the present invention with reference to the accompanying drawings in the embodiments of the present invention. Apparently, the described embodiments are some but not all of the embodiments of the present invention. The embodiments of the present invention may be applied to a WLAN. Currently, a standard used in the WLAN is an Institute of Electrical and Electronics Engineers (Institute of Electrical and Electronics Engineers, IEEE for short) 802.11 series. The WLAN may include multiple basic service sets (Basic Service Set, BSS for short), and a network node in the basic service set is a STA. As shown in FIG. 1, one BBS may include one AP and three STAs: STA 1, STA 2, and STA3.

An access point type station AP may also be referred to as a wireless access point, a hotspot, or the like. The AP is an access point by using which a mobile user enters a wired network, and the AP is mainly deployed in home or within a building and a park with a typical coverage radius of tens to hundreds of meters, and certainly may also be deployed outdoors. The AP is equivalent to a bridge that connects a wired network and a wireless network, and a main function of the AP is connecting wireless network clients together and then connecting the wireless network to the Ethernet. Specifically, the AP may be a terminal device or network device that has a WiFi (Wireless Fidelity, WiFi for short) chip. Optionally, the AP may be a device that supports the 802.11ax standard. Further, optionally, the AP may be a device that supports multiple WLAN standards such as 802.11ac, 802.11n, 802.11g, 802.11b, and 802.11a.

Optionally, the STA may support the 802.11ax standard. Further, optionally, the STA supports multiple WLAN standards such as 802.11ac, 802.11n, 802.11g, 802.11b, and 802.11a.

In a WLAN system 802.11ax to which an OFDMA technology is introduced, the AP may perform uplink and downlink transmission for different STAs on different time-frequency resources.

The embodiments of the present invention are mainly used for reducing overheads of a whole network. Nodes in all the following embodiments may include an AP or a STA.

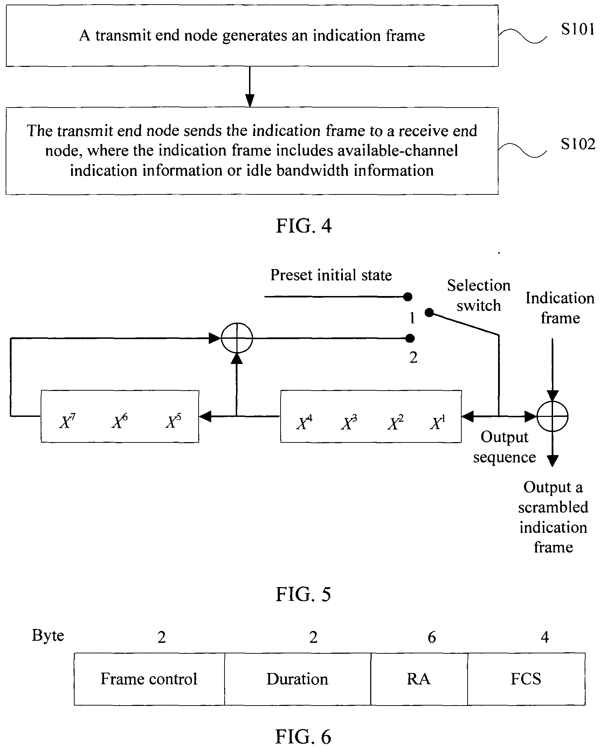

FIG. 4 is a schematic flowchart of Embodiment 1 of a method for transmitting data that carries indication information according to the present invention. As shown in FIG. 4, the method includes the following steps.

S101. A transmit end node generates an indication frame.

S102. The transmit end node sends the indication frame to a receive end node.

The indication frame includes available-channel indication information or idle bandwidth information.

After receiving the indication frame, the receive end node may obtain the available-channel indication information or the idle bandwidth information carried in the indication frame.

The available-channel indication information may indicate channels that are idle, and bandwidth of the channels that are in an idle state. The idle bandwidth information may indicate bandwidth that is in an idle state. In the prior art, the available-channel information cannot be indicated.

This embodiment mainly focuses on how the transmit end node responds after receiving a bandwidth indication. That is, a receive end node may first send one indication frame (for example, an RTS frame) to indicate bandwidth indication information, and an indication frame (for example, a CTS frame) sent by the transmit end node to the receive end node responds to the one indication frame.

Specifically, multiple transmit end nodes may simultaneously send the indication frame to the receive end node by means of uplink OFDMA or multi-user multiple-input multiple-output (Multi-User Multiple-Input Multiple-Output, MU-MIMO for short), and do not need to send idle bandwidth information to the receive end node one by one.

In this embodiment, the transmit end node generates the indication frame, and directly sends the indication frame to the receive end node. Multiple transmit end nodes may simultaneously send indication frames to the receive end node, and do not need to send the idle bandwidth information to the receive end node one by one. The receive end node may obtain the available-channel indication information or the idle bandwidth information according to the indication frame. This greatly reduces transmission overheads.

Further, that a transmit end node generates an indication frame may be specifically: setting, by the transmit end node, a value of the first bit in the indication frame, where the value of the first bit is used to identify the available-channel indication information or the idle bandwidth information.

That is, different values of the first bit may identify different available-channel indication information or different idle bandwidth information.

More specifically, that the value of the first bit is used to identify the available-channel indication information may be: when the value of the first bit is a first value, identifying that a primary channel of the transmit end node is idle, and all secondary channels are busy; or when the value of the first bit is a second value, identifying that a primary channel of the transmit end node is idle, and at least one secondary channel is idle.

It should be noted that, by using a clear channel assessment (clear channel assessment, CCA for short) mechanism, both the transmit end node and the receive end node can detect whether a channel is in the idle state, and detect bandwidth of a channel that is in the idle state and bandwidth of a channel that is in a busy state.

FIG. 5 is a schematic structural diagram of a scrambler in a method for transmitting data that carries indication information according to the present invention. Specifically, before the transmit end node sends the indication frame to the receive end node, the transmit end node may further scramble the indication frame by using the scrambler.

As shown in FIG. 5, for example, the scrambler uses seven bits *X*¹*_X*⁷ to represent initial state bits of the scrambler, and a generator polynomial of the scrambler is *G* (*X*) = *X*⁷ + *X*⁴ + 1. In a specific scrambling process, the scrambler repeatedly generates 127-bit sequences, and performs exclusive OR on the 127-bit sequence with to-be-scrambled data, so as to scramble the to-be-scrambled data. As shown in FIG. 5, exclusive OR is performed on an indication frame with an output sequence, to obtain a scrambled indication frame. Specifically, a bit quantity of the sequence on which exclusive OR is performed with the indication frame is the same as a bit quantity of the indication frame. For example, if the bit quantity of the indication frame is less than 127, exclusive OR is performed on the indication frame with a sequence that is of a bit quantity same as the bit quantity of the indication frame and that is taken from the 127-bit sequence generated by the scrambler. If the bit quantity of the indication frame is greater than 127, two 127-bit sequences are generated, and exclusive OR is performed on the indication frame with a sequence that is of a bit quantity same as the bit quantity of the indication frame and that is taken from the generated sequences.

On the basis of the foregoing embodiment, when the value of the first bit is the first value, it is identified that the primary channel of the transmit end node is idle, and all the secondary channels are busy. All initial state bits of the scrambler that is used for scrambling are random values. Specifically, the scrambler in FIG. 5 is used as an example. A selection switch is directly connected to 2, so that all the initial state bits of the scrambler are generated at random. The scrambler constantly and cyclically generates 127-bit sequences, and the last seven bits of the 127-bit sequence are the same as the foregoing initial state bits.

When the value of the first bit is the second value, it is identified that the primary channel of the transmit end node is idle, and the at least one secondary channel is idle. At least one of the initial state bits of the scrambler that is used for scrambling is used to identify whether a corresponding secondary channel is idle.

Specifically, the scrambler in FIG. 5 is used as an example. In this case, the selection switch is first connected to 1, and preset initial states are entered. For example, seven bits may be entered as values of the initial states. At least one of the preset initial state bits is used to identify whether a corresponding secondary channel is idle, and all other bits may be generated at random. After the entering is completed, the selection switch is then connected to 2, and the scrambler constantly and cyclically generates 127-bit sequences. The first seven bits of the 127-bit sequence are the same as those of the preset initial states.

For example, if the transmit end node learns from an RTS indication frame (different from the indication frame generated by the transmit end node) sent by a receive end node that, an idle bandwidth is less than or equal to 80 MHz and is greater than 20 MHz, three bits of the seven bits of the initial states of the scrambler may be used to indicate whether three secondary 20 MHz channels under 80 MHz are available. At least one of the secondary channels is available, and the other four bits of the initial states may be random values.

If the transmit end node learns from an RTS indication frame sent by a receive end node that, an idle bandwidth is equal to 160 MHz, all seven bits of the seven bits of the initial states of the scrambler may be used to indicate whether seven secondary 20 MHz channels under 160 MHz are available, where at least one secondary channel is available. Alternatively, five bits of the seven bits of the initial states of the scrambler are used to identify whether four preferred 20 MHz channels are available, where four bits are used to respectively indicate whether corresponding four 20 MHz channels are available, and one bit identifies 80 MHz under the 160 MHz bandwidth. The remaining two bits are random values.

It should be noted that, when the transmit end node learns from an RTS indication frame sent by a receive end node that, an idle bandwidth is 20 MHz, if the transmit end node is also idle on this 20 MHz channel, the transmit end node generates and sends the indication frame. In this case, the value of the first bit is the first value, that is, the initial states of the scrambler that scrambles the indication frame are non-all-zero random values; or if the transmit end node is busy on this 20 MHz channel, the indication frame is not generated or sent.

In another embodiment, that the value of the first bit is used to identify the idle bandwidth information may be specifically: when the value of the first bit is a first value, identifying that the indication frame does not carry the idle bandwidth information; or when the value of the first bit is a second value, identifying that the indication frame carries the idle bandwidth information. Further, if the indication frame carries the idle bandwidth information, the indication frame may further specifically indicate an idle bandwidth type.

Before the transmit end node sends the indication frame to the receive end node, the transmit end node may further scramble the indication frame by using the scrambler. For details of the scrambler, refer to FIG. 5.

When the value of the first bit is the first value, that is, the indication frame does not carry the idle bandwidth information, all initial state bits of the scrambler may be random values. That is, the selection switch is directly connected to 2, so that all the initial state bits of the scrambler are generated at random.

When the value of the first bit is the second value, at least one of the initial state bits of the scrambler is used to identify a corresponding idle bandwidth type. In specific implementation, it needs to be ensured that not all values of the initial states are 0. In a WLAN system 802.11ax, idle bandwidth types may include 20MHz, 40MHz, 80MHz, and 160MHz. Two bits of the seven bits of the initial states may be used to identify an idle bandwidth type. For example, "00" identifies 20 MHz, and "01" identifies 40 MHz.

In this case, the selection switch is first connected to 1, and preset initial states are entered. For example, seven bits are entered as values of the initial states. At least one of the preset initial state bits is used to identify a corresponding idle bandwidth type. After the entering is completed, the selection switch is then connected to 2. An implementation is: Two bits of the seven bits of the preset initial states identify an idle bandwidth type, and the remaining five bits may be random values.

On the basis of the foregoing embodiment, the indication frame may be a CTS frame.

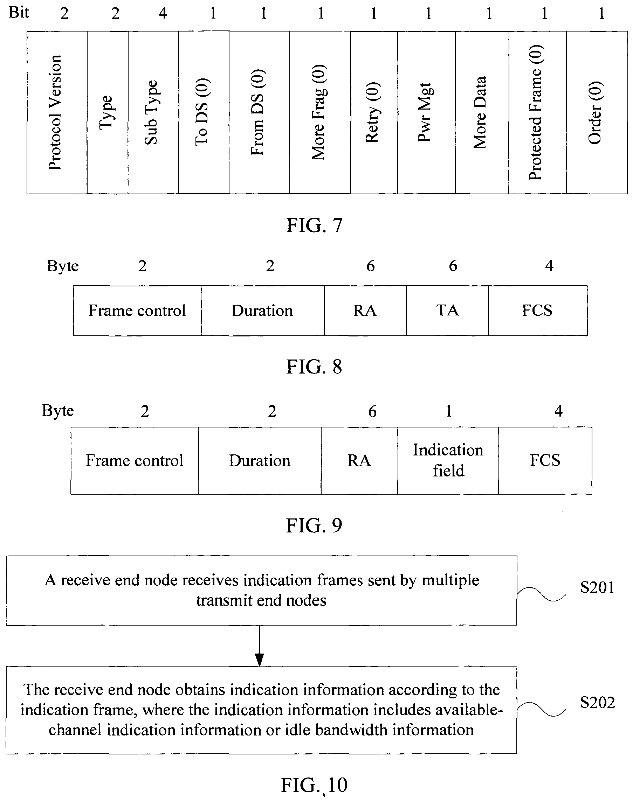

FIG. 6 is a schematic structural diagram of a CTS frame in a method for transmitting data that carries indication information according to the present invention, and FIG. 7 is a schematic structural diagram of another CTS frame in a method for transmitting data that carries indication information according to the present invention.

As shown in FIG. 6, the CTS frame includes a "frame control (frame control)" field, a "duration (Duration)" field, a "receiver address (receiver address, RA for short)" field, and a "frame check sequence (frame check sequence, FCS for short)" field. Data above a frame structure in FIG. 6 represents a byte quantity corresponding to each field. For example, the "frame control" field includes two bytes, that is, 16 bits.

Specifically, FIG. 7 shows an internal structure of the "frame control" field, and data above the structure represents a bit quantity corresponding to each subfield. A subfield identified with "(0)" represents that the subfield is meaningless, and may be used for another purpose, for example, may be used as the first bit.

Correspondingly, the first bit may be a bit in the "receiver address" field in the CTS frame. The first bit of a MAC address indicates multicast/unicast. However, because a receiver address of the CTS frame is certainly a unicast address, the transmit end may set the first bit in the receiver address in the CTS frame to a first value or a second value to carry information. The "receiver address" field includes six bytes in total, and the first bit of the six bytes may be used as the first bit.

Alternatively, the first bit may be at least one bit in the "frame control" field in the CTS frame. Specifically, one or more of subfields: To DS, From DS, More Frag, Retry, Protected Frame, or Order in the "frame control" field may be used as the first bit. For example, the To DS bit may be used as the first bit, and the initial states of the scrambler may be used to identify specific available-channel indication information or specific idle bandwidth information. For another example, a combination of bits in the subfields: To DS, From DS, More Frag, Retry, Protected Frame, and Order may be used as the first bit, and the initial states of the scrambler are used to identify specific available-channel indication information or specific idle bandwidth information. For example, a combined value "0000" of To DS, From DS, More Frag, and Retry represents the first value, and a combined value "0001" of To DS, From DS, More Frag, and Retry represents the second value. Other values, such as "0010", are reserved bits, and may indicate another meaning.

FIG. 8 is a schematic structural diagram of a MAC frame in a method for transmitting data that carries indication information according to the present invention.

The indication frame in the foregoing embodiment may be a media access control (medium access control, MAC for short) frame. The MAC frame includes a data frame, a management frame, or another control frame, for example, a trigger frame. Correspondingly, the first bit may be a bit in the MAC frame. Specifically, the first bit may be a bit in a "transmitter address (transmitter address, TA for short)" field in the MAC frame. Preferably, the first bit in the "TA" field in the MAC frame may be used as the foregoing first bit.

FIG. 8 shows a directional multi-gigabit (Directional Multi-Gigabit, DMG for short) CTS frame in 802.11ad. The DMG CTS frame is a control frame in the MAC frame, and includes a "TA" field. Therefore, the first bit may be located in the DMG CTS frame, and specifically, may be at least one bit in the "TA" field. Preferably, the first bit in the "TA" field in the MAC frame may be used as the first bit.

In another embodiment, the indication frame may include an indication field, and the indication field includes multiple bits. Correspondingly, that a transmit end node generates an indication frame is specifically: setting, by the transmit end node, values of the multiple bits, and identifying different available-channel indication information by using the values of the multiple bits, or identifying different idle bandwidth information by using the values of the multiple bits.

FIG. 9 is a schematic structural diagram of still another CTS frame in a method for transmitting data that carries indication information according to the present invention. The indication frame may be the CTS frame shown in FIG. 9, and the indication field carries the available-channel indication information or the idle bandwidth information.

For example, the indication field may be an eight-bit field, and different values may be set to identify the available-channel indication information or the idle bandwidth information. It is assumed that for a 160 MHz bandwidth, "11000000" may be used to identify that the first 20 MHz channel and the second 20 MHz channel are available, and the other channels are unavailable. Likewise, before sending the indication frame to the receive end node, the transmit end node needs to scramble the indication frame by using a scrambler. In this embodiment, no special requirement is imposed on initial states of the scrambler. The initial states may be random, but are not limited thereto.

FIG. 10 is a schematic flowchart of Embodiment 2 of a method for transmitting data that carries indication information according to the present invention. As shown in FIG. 10, the method includes the following steps.

S201. A receive end node receives indication frames sent by multiple transmit end nodes. Specifically, the receive end node may receive the indication frames sent by the multiple transmit end nodes by means of uplink OFDMA or MU-MIMO.

S202. The receive end node obtains indication information according to the indication frame. The indication information includes available-channel indication information or idle bandwidth information.

Specifically, the indication frame carries the available-channel indication information or the idle bandwidth information. After receiving the indication frame, the receive end node may obtain the available-channel indication information or the idle bandwidth information carried in the indication frame.

In this embodiment, the receive end node may directly receive the indication frames sent by the multiple transmit end nodes, and does not need to receive, one piece by one piece, the indication information sent by the multiple transmit end nodes. In addition, the receive end node may obtain the available-channel indication information or the idle bandwidth information according to the indication frame. This greatly reduces transmission overheads.

Further, that the receive end node obtains indication information according to the indication frame is specifically: obtaining, by the receive end node, a value of the first bit in the indication frame according to the indication frame, where the value of the first bit is used to identify the available-channel indication information or the idle bandwidth information.

More specifically, that the value of the first bit is used to identify the available-channel indication information may be: when the value of the first bit is a first value, identifying that a primary channel of the transmit end node is idle, and all secondary channels are busy; or when the value of the first bit is a second value, identifying that a primary channel of the transmit end node is idle, and at least one secondary channel is idle.

For example, when the value of the first bit is "0", it is identified that the primary channel of the transmit end node is idle, and all the secondary channels are busy. When the value of the first bit is "1", it is identified that the primary channel of the transmit end node is idle, and at least one secondary channel is idle.

Because the indication frame sent by the transmit end node may be a scrambled indication frame, correspondingly, that the receive end node obtains indication information according to the indication frame is specifically: obtaining, by the receive end node, an initial state bit of a scrambler according to a scrambling code of the indication frame, and descrambling, by using a descrambler, the indication frame according to the initial state bit of the scrambler, so as to obtain the indication information.

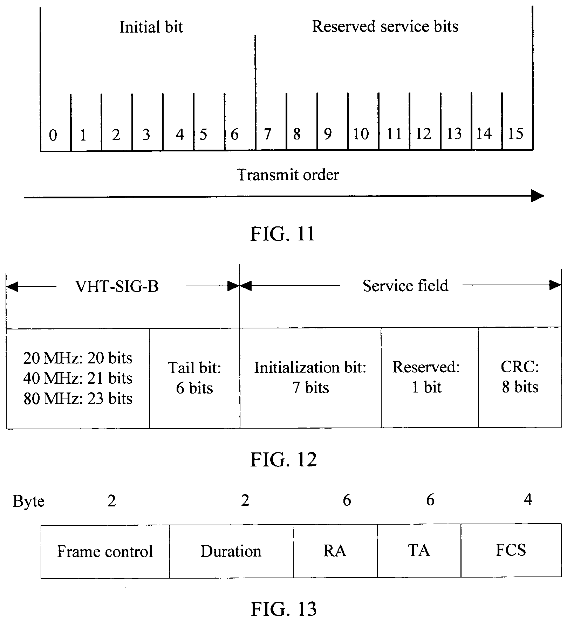

FIG. 11 is a schematic structural diagram of a service field in a method for transmitting data that carries indication information according to the present invention. FIG. 12 is a schematic structural diagram of a service field and a preamble in a method for transmitting data that carries indication information according to the present invention.

In this embodiment of the present invention, the transmit end node and the receive end node use a same scrambler with a generator polynomial by default. In addition, synchronization is performed between the scrambler used by the transmit end node and the descrambler used by the receive end node. Specifically, the indication frame exchanged between the transmit end node and the receive end node includes a service field (Service Field), a data bit, a tail (Tail) bit, and a trailing bit when necessary.

In 802.11n, referring to FIG. 11, the first seven bits in the service field are initialization bits (Scrambler Initialization) of the scrambler, and are used for synchronization with the descrambler. These bits are set to 0, so that a receiver estimates an initial state of the scrambler. The remaining nine bits are reserved service bits (Reserved Service Bits), and are also set to 0. A transmit order (Transmit Order) is from a low bit 0 to a high bit 15.

In 802.11ac, as shown in FIG. 12, the last eight bits of the nine reserved bits in the service field in 802.11n are set to an eight-bit cyclic redundancy code (Cyclic Redundancy Check, CRC for short). Calibration and error detection are performed on a very high throughput field B (VHT-SIG-B) in the preamble. Initialization bits of the scrambler are still seven bits, and the seven bits are all set to 0.

After receiving the scrambled indication frame, the receive end node obtains, according to received scrambled data of the first seven bits and data of the first seven bits in the service field in the indication frame, the first seven bits of a 127-bit sequence generated by the scrambler, and further determines a value of the initial state of the scrambler according to the first seven bits of the 127-bit sequence and a generator polynomial. After receiving the initial state bits of the scrambler, the receive end node may repeatedly generate 127-bit sequences, and performs exclusive OR on the generated 127-bit sequence with the scrambled indication frame, so as to restore the indication frame before scrambling.

It should be noted that, in a descrambling process, data of the first seven bits of the indication frame needs to be used. Therefore, when sending the indication frame, the transmit end node sets the data of the first seven bits to a known sequence, and the data of all the first seven bits may all be set to 0, and placed in the service field. In the descrambling process, the receive end node may learn of the value of the initial state of the scrambler.

In the foregoing embodiment, when the first bit is the first value, all initial state bits of the scrambler are random values. When the value of the first bit is the second value, at least one of the initial state bits of the scrambler is used to identify whether a corresponding secondary channel is idle. For details, refer to the foregoing embodiments, and details are not described herein again. In another embodiment, that the value of the first bit is used to identify the idle bandwidth information is specifically: when the value of the first bit is a first value, identifying that the indication frame does not carry the idle bandwidth information; or when the value of the first bit is a first value, identifying that the indication frame carries the idle bandwidth information. For example, when the first bit is "0", it is identified that the indication frame does not carry the idle bandwidth information. When the first bit is "1", it is identified that the indication frame carries the idle bandwidth information. For details, refer to the foregoing embodiments, and details are not described herein again.

Further, because the indication frame sent by the transmit end node may be a scrambled indication frame, correspondingly, that the receive end node obtains indication information according to the indication frame is specifically: obtaining, by the receive end node, an initial state bit of a scrambler according to a scrambling code of the indication frame, and descrambling, by using a descrambler, the indication frame according to the initial state bit of the scrambler, so as to obtain the indication information. For a detailed descrambling process, refer to the foregoing embodiment, and details are not described herein.

It should be noted that when the value of first bit is the first value, all initial state bits of the scrambler are random values. When the value of the first bit is the second value, at least one of the initial state bits of the scrambler is used to identify a corresponding idle bandwidth type. Generally, when the first bit is "0", all the initial state bits of the scrambler are random values. When the first bit is "1", at least one of the initial state bits of the scrambler is used to identify a corresponding idle bandwidth type.

In a specific implementation process, the indication frame is a CTS frame. Correspondingly, the first bit is a bit in a "receiver address" field in the CTS frame, or the first bit is at least one bit in a "frame control" field in the CTS frame. For details, refer to FIG. 6 and FIG. 7.

The indication frame may be a MAC frame. Correspondingly, the first bit may be a bit in the MAC frame. FIG. 8 shows a DMG CTS frame in 802.11ad. The DMG CTS frame is a control frame in the MAC frame, and includes a "TA" field. Therefore, the first bit may be located in the DMG CTS frame, and specifically, may be at least one bit in the "TA" field. Preferably, the first bit in the "TA" field in the MAC frame may be selected as the first bit.

In another embodiment, referring to FIG. 9, the indication frame may include an indication field, and the indication field includes multiple bits.

Values of the multiple bits may identify different available-channel indication information, or values of the multiple bits may identify different bandwidth information.

Similar to the foregoing embodiment, that the receive end node obtains indication information according to the indication frame is specifically: obtaining, by the receive end node, an initial state bit of a scrambler according to a scrambling code of the indication frame, and descrambling, by using a descrambler, the indication frame according to the initial state bit of the scrambler, so as to obtain the indication information. For a detailed descrambling process, refer to the foregoing embodiment, and details are not described herein.

Another aspect of the embodiments of the present invention focuses on the following: In the prior art, after a STA receives a CTS frame, if the CTS frame is not destined for the STA, the STA directly sets an NAV to stop data transmission in a specific time period, and consequently, a system throughput rate is low.

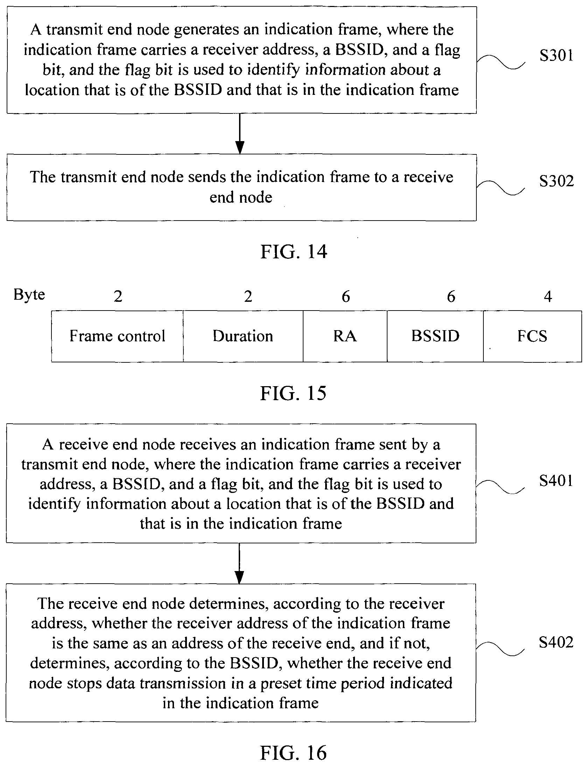

FIG. 13 is a schematic structural diagram of an RTS frame in a method for transmitting data that carries indication information according to the present invention. FIG. 14 is a schematic flowchart of Embodiment 3 of a method for transmitting data that carries indication information according to the present invention.

As shown in FIG. 13, the RTS frame includes: a "frame control" field, a "duration" field, an "RA" field, a "TA" field, and an "FCS" field. Data above a frame structure in FIG. 13 represents a byte quantity corresponding to each field. For example, the "frame control" field includes two bytes, that is, 16 bits.

It can be learned that in an RST/CST mechanism, the RST frame includes not only the "RA" field, but also the "TA" field. Therefore, regardless of whether an AP sends the RST frame to a STA, or a STA sends the RST frame to an AP, the RST frame carries a MAC address of the AP. However, as shown in FIG. 6, the CTS frame includes only the "RA" field. That is, according to the prior art, when the STA sends the CTS frame to the AP, the CTS frame carries a MAC address of the AP, and when the AP sends the CST frame to the STA, the CST frame does not carry the MAC address of the AP. In a BSS, the MAC address of the AP is used as a BSS identifier (BSS identifier, BSSID for short). Therefore, when receiving the CST frame sent by the AP, the STA cannot determine whether the CST frame is from a BSS to which the STA belongs.

As shown in FIG. 14, the method in this embodiment includes the following steps.

S301. A transmit end node generates an indication frame, where the indication frame carries a receiver address, a BSSID, and a flag bit, and the flag bit is used to identify information about a location that is of the BSSID and that is in the indication frame.

Specifically, the flag bit identifies whether the indication frame has the BSSID itself or the BSSID is additionally added. If the indication frame has the BSSID itself, the BSSID is the receiver address of the indication frame. If the BSSID is additionally carried, it indicates that the BSSID needs to be additionally added in the indication frame.

S302. The transmit end node sends the indication frame to a receive end node.

In this embodiment, the transmit end node generates the indication frame, and the indication frame carries the receiver address, the BSSID, and the flag bit, ensuring that the indication frame certainly includes the BSSID. After receiving the indication frame, another receive end node other than the receive end node corresponding to the receiver address of the indication frame may obtain the BSSID according to the indication frame, so as to determine whether the indication frame is from a BSS to which the another receive end node belongs, and further determine whether data sending needs to be stopped in a specific time period. That is, not all receive end nodes other than the receive end node corresponding to the receiver address of the indication frame need to stop data sending after properly receiving the indication frame. Some receive end nodes may further determine, with reference to a CCA detection result, whether to continue to send data. Specifically, that a transmit end node generates an indication frame is specifically: if a receiver address of an original indication frame is the BSSID, setting, by the transmit end node, a value of a flag bit in the original indication frame to a first value, so as to generate the indication frame; or if a receiver address of an original indication frame is not the BSSID, setting, by the transmit end node, a value of a flag bit in the original indication frame to a second value, and adding the BSSID to the original indication frame, so as to generate the indication frame.

Specifically, the indication frame may be a CTS frame.

Correspondingly, the flag bit may be the first bit in a "receiver address" field in the CTS frame, or the flag bit may be at least one bit in a "frame control" field in the CTS frame. For example, a flag bit of "1" represents that the "receiver address" field in the CTS frame is the BSSID, and a flag bit of "0" represents that the "receiver address" field in the CTS frame is not the BSSID, and the BSSID is additionally added.

FIG. 15 is a schematic structural diagram of yet another CTS frame in a method for transmitting data that carries indication information according to the present invention. In the CTS frame shown in FIG. 15, a "BSSID" field is additionally added, and is specifically used to carry the BSSID. A location and a structure of the field are not limited thereto.

FIG. 16 is a schematic flowchart of Embodiment 4 of a method for transmitting data that carries indication information according to the present invention. As shown in FIG. 16, the method includes the following steps.

S401. A receive end node receives an indication frame sent by a transmit end node, where the indication frame carries a receiver address, a BSSID, and a flag bit, and the flag bit is used to identify information about a location that is of the BSSID and that is in the indication frame.

Specifically, the flag bit identifies whether the indication frame has the BSSID itself or the BSSID is additionally added. If the indication frame has the BSSID itself, the BSSID is the receiver address of the indication frame. If the BSSID is additionally carried, it indicates that the BSSID needs to be additionally added in the indication frame.

S402. The receive end node determines, according to the receiver address, whether the receiver address of the indication frame is the same as an address of the receive end, and if not, determines, according to the BSSID, whether the receive end node stops data transmission in a preset time period indicated in the indication frame.

The preset time period may be indicated in a "duration" field in the indication frame. Specifically, if the receiver address of the indication frame is different from the address of the receive end, it is further determined according to the BSSID whether the transmit end node and the receive end node belong to a same BSS. If yes, the receive end node stops data transmission in the preset time period by setting an NAV, or if not, the receive end node may determine, according to a CCA detection result, to stop data transmission or continue data transmission in the preset time period. That is, if the receive end node and the transmit end node do not belong to a same BSS, data transmission does not necessarily need to be stopped, so as to improve a system throughput rate.

When the receiver address of the indication frame is the same as the address of the receive end, it indicates that the indication frame is destined for the receive end node. If the receiver address of the indication frame is different from the address of the receive end node, it indicates that the indication frame is destined for another node.

As described in the foregoing embodiment, both the transmit end node and the receive end node determine an idle state or a busy state of a channel by means of CCA detection, and the receive end node may determine, with reference to a CCA detection result according to the BSSID, whether the receive end node stops data transmission in the preset time period. In this embodiment, to improve a possibility that nodes from different BSSs simultaneously transmit data, and therefore improve spectrum utilization, when a node receives an indication frame that is not from a BSS to which the node belongs, a threshold for idle channel detection by means of CCA may be raised, that is, an idle channel determining condition is liberated. For example, when a station previously detects any valid data package on a 20 MHz channel, and it is detected by means of CCA that within four milliseconds, a possibility that a signal-to-noise ratio is greater than or equal to -82 dBm is greater than 90%, the node determines that the channel is busy. Therefore, in this embodiment, a CCA detection threshold may be raised, for example, be raised to -72 dBm. That is, when it is detected by means of CCA that within four milliseconds, a possibility that a signal-to-noise ratio is greater than or equal to -72 dBm is greater than 90%, the node determines that the channel is busy. That is, if the node properly receives an indication frame, and a BSSID in the indication frame indicates that the indication frame is from a different BSS, and if a CCA detection value of the node is less than -72 dBm, the CTS frame may be ignored, and backoff continues for data transmission. If the node properly receives an indication frame, and a BSSID in the indication frame indicates that the indication frame is from a same BSS, the node sets an NAV according to a preset time in a "duration" field in the indication frame, so as to stop data transmission.

In this embodiment, the indication frame received by the receive end node includes the receiver address and the BSSID, and the receive end node may determine, according to the receiver address of the indication frame, whether the indication frame is destined for the receive end node. If not, the receive end node may further determine, according to the BSSID, whether to stop data transmission in a specific time period. In this way, data transmission may not necessarily be stopped when the receiver address of the indication frame and the address of the receive end node are different. This improves a system throughput.

Specifically, when the flag bit is a first value, it is identified that the receiver address of the indication frame is the BSSID, or when the flag bit is a second value, it is identified that the receiver address of the indication frame is not the BSSID.

More specifically, when the flag bit is the second value, as shown in FIG. 15, the indication frame includes a BSSID field, and the BSSID field includes the BSSID.

The first value may be " 1", and the second value may be "0".

In another embodiment, the flag bit is the first bit in a receiver address field in the indication frame. Correspondingly, that the receive end node determines, according to the receiver address, whether the receiver address of the indication frame is the same as an address of the receive end is specifically: if a value of the first bit is the first value, the receive end node converts the value of the first bit in the receiver address of the indication frame into the second value, and then determines whether a receiver address obtained after the conversion is the same as the address of the receive end node. If a value of the first bit is the second value, the receive end node directly determines whether the receiver address of the indication frame is the same as the address of the receive end node.

It can be understood that the first value may be "1", and the second value may be "0". Analogy may be performed on the foregoing receiving process, that is, the first value may be "0", and the second value may be "1".

In another embodiment, the flag bit may be at least one bit in a "frame control" field in the indication frame. In this case, the receive end node determines, according to the receiver address, whether the receiver address of the indication frame is the same as the address of the receive end, and does not need to convert the address. That is, the receive end node directly determines whether the receiver address of the indication frame is the same as the address of the receive end node. As shown in FIG. 7, one or more of subfields: To DS, From DS, More Frag, Retry, Protected Frame, or Order in the "frame control" field may be used as the flag bit. For example, a combination of bits in To DS, From DS, More Frag, and Retry may be used as the flag bit. A combined value "0000" of To DS, From DS, More Frag, and Retry represents the first value, but is not limited thereto.

In the foregoing embodiment, the indication frame may be a CTS frame, but is not limited thereto. For example, the indication frame may also be a MAC frame.

In another embodiment, the indication frame may be an RTS frame. When receiving an RTS frame sent by an 802.11ax device, the receive end node determines, according to a BSSID in the RTS frame, whether the receive end node and a transmit end node that sends the RTS frame belong to a same BSS. If yes, the receive end node sets an NAV, so as to stop data transmission in a preset time period. If not, the receive end node further determines, according to a CCA detection result, whether to continue transmission. For a specific determining method, refer to the foregoing embodiment, and details are not described herein again. When receiving an RTS frame sent by a device complying with a standard prior to 802.11ax, the receive end node directly sets an NAV according to a "duration" field in the RTS frame, so as to stop data transmission in a preset time period.

To differentiate between the RTS frame sent by the 802.11ax device and the RTS frame sent by the device complying with a standard prior to 802.11ax, one or more of the subfields: To DS, From DS, More Frag, Retry, Protected Frame, or Order in a "frame control" field in the RTS frame may be used as the flag bit. For example, a To DS bit is used to indicate whether the RTS frame is sent by the 802.11ax device. When the To DS bit is set to 1, it indicates that the RTS frame is sent by the 802.11ax device. When the To DS bit is set to 0, it indicates that the RTS frame is sent by the device complying with a standard prior to 802.11ax.

The device complying with a standard prior to 802.11ax is a device corresponding to a standard prior to the 802.11ax standard, such as an 802.11ac device. This is not limited herein.

A person of ordinary skill in the art may understand that all or some of the steps of the method embodiments may be implemented by a program instructing relevant hardware. The program may be stored in a computer readable storage medium. When the program runs, the steps of the method embodiments are performed. The foregoing storage medium includes: any medium that can store program code, such as a ROM, a RAM, a magnetic disk, or an optical disc.

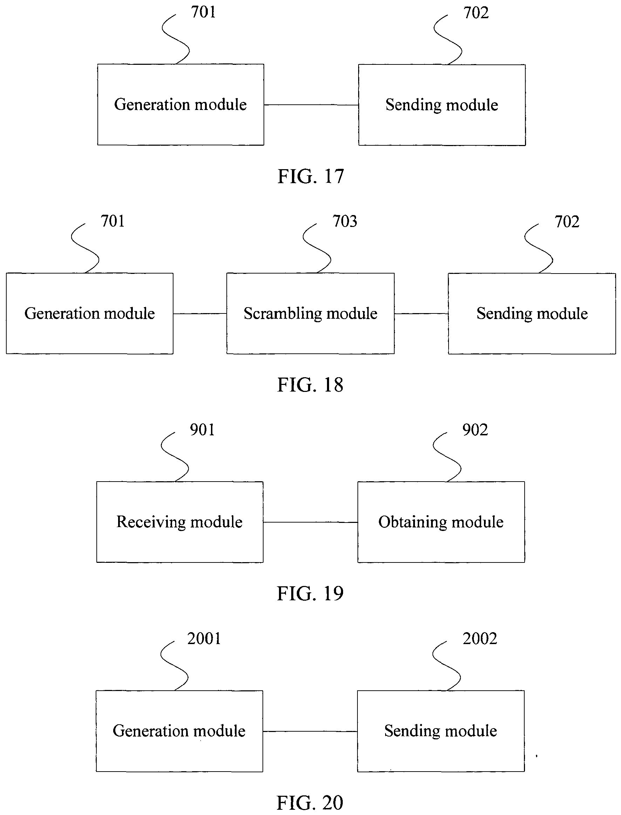

FIG. 17 is a schematic structural diagram of Embodiment 1 of a transmit end node according to the present invention. As shown in FIG. 17, the transmit end node includes a generation module 701 and a sending module 702.

The generation module 701 is configured to generate an indication frame.

The sending module 702 is configured to send the indication frame to a receive end node.

The indication frame includes available-channel indication information or idle bandwidth information.

The transmit end node is configured to execute the method embodiment corresponding to FIG. 4, and implementation principles and technical effects thereof are similar, and details are not described herein.

In another implementation, the generation module 701 is specifically configured to set a value of the first bit in the indication frame, where the value of the first bit is used to identify the available-channel indication information or the idle bandwidth information.

Specifically, that the value of the first bit is used to identify the available-channel indication information is specifically: when the value of the first bit is a first value, identifying that a primary channel of the transmit end node is idle, and all secondary channels are busy; or when the value of the first bit is a second value, identifying that a primary channel of the transmit end node is idle, and at least one secondary channel is idle.

FIG. 18 is a schematic structural diagram of Embodiment 2 of a transmit end node according to the present invention. As shown in FIG. 18, on the basis of FIG. 17, the transmit end node further includes a scrambling module 703.

The scrambling module 703 is configured to scramble the indication frame by using a scrambler. When the value of the first bit is the first value, all initial state bits of the scrambler are random values; or when the value of the first bit is the second value, at least one of initial state bits of the scrambler is used to identify whether a corresponding secondary channel is idle.

In another implementation, that the value of the first bit is used to identify the idle bandwidth information includes:
when the value of the first bit is a first value, identifying that the indication frame does not carry the idle bandwidth information; or when the value of the first bit is a second value, identifying that the indication frame carries the idle bandwidth information. Referring to FIG. 18, in this implementation, the indication frame also needs to be scrambled. The transmit end node includes the scrambling module 703, which is configured to scramble the indication frame by using a scrambler. When the value of the first bit is the first value, all initial state bits of the scrambler are random values; or when the value of the first bit is the second value, at least one of initial state bits of the scrambler is used to identify a corresponding idle bandwidth type.

On the basis of the foregoing embodiment, the indication frame is a clear to send CTS frame. Correspondingly, the first bit is a bit in a receiver address field in the CTS frame, or the first bit is at least one bit in a frame control field in the CTS frame; or the indication frame is a media access control MAC frame, and correspondingly, the first bit is a bit in the MAC frame.

In another implementation, the indication frame includes an indication field, and the indication field includes multiple bits. Correspondingly, the generation module 701 is specifically configured to: set values of the multiple bits, and identify different available-channel indication information by using the values of the multiple bits, or identify different idle bandwidth information by using the values of the multiple bits.

Likewise, in this implementation, the indication frame also needs to be scrambled. Referring to FIG. 18, the transmit end node includes the scrambling module 703, which is configured to scramble the indication frame by using a scrambler.

FIG. 19 is a schematic structural diagram of Embodiment 1 of a receive end node according to the present invention. As shown in FIG. 19, the receive end node includes a receiving module 901 and an obtaining module 902.

The receiving module 901 is configured to receive indication frames sent by multiple transmit end nodes.

The obtaining module 902 is configured to obtain indication information according to the indication frame.

The indication information includes available-channel indication information or idle bandwidth information.

The receive end node is configured to execute the method embodiment corresponding to FIG. 10, and implementation principles and technical effects thereof are similar, and details are not described herein.

In another implementation, the obtaining module 902 is specifically configured to obtain a value of the first bit in the indication frame according to the indication frame, where the value of the first bit is used to identify the available-channel indication information or the idle bandwidth information.

Further, that the value of the first bit is used to identify the available-channel indication information includes: when the value of the first bit is a first value, identifying that a primary channel of the transmit end node is idle, and all secondary channels are busy; or when the value of the first bit is a second value, identifying that a primary channel of the transmit end node is idle, and at least one secondary channel is idle.

Correspondingly, the obtaining module 902 is specifically configured to: obtain an initial state bit of a scrambler according to a scrambling code of the indication frame, and descramble, by using a descrambler, the indication frame according to the initial state bit of the scrambler, so as to obtain the indication information. When the value of the first bit is the first value, all initial state bits of the scrambler are random values; or when the value of the first bit is the second value, at least one of initial state bits of the scrambler is used to identify whether a corresponding secondary channel is idle.

In another implementation, that the value of the first bit is used to identify the idle bandwidth information includes: when the value of the first bit is a first value, identifying that the indication frame does not carry the idle bandwidth information; or when the value of the first bit is a second value, identifying that the indication frame carries the idle bandwidth information.

Correspondingly, the obtaining module 902 is specifically configured to: obtain an initial state bit of a scrambler according to a scrambling code of the indication frame, and descramble, by using a descrambler, the indication frame according to the initial state bit of the scrambler, so as to obtain the indication information. When the value of the first bit is the first value, all initial state bits of the scrambler are random values; or when the value of the first bit is the second value, at least one of initial state bits of the scrambler is used to identify a corresponding idle bandwidth type.

The indication frame is a clear to send CTS frame. Correspondingly, the first bit is a bit in a receiver address field in the CTS frame, or the first bit is at least one bit in a frame control field in the CTS frame; or the indication frame is a media access control MAC frame, and correspondingly, the first bit is a bit in the MAC frame.

In another embodiment, the indication frame includes an indication field, and the indication field includes multiple bits, where values of the multiple bits identify different available-channel indication information, or values of the multiple bits identify different idle bandwidth information. Correspondingly, the obtaining module 902 is specifically configured to: obtain an initial state bit of a scrambler according to a scrambling code of the indication frame, and descramble, by using a descrambler, the indication frame according to the initial state bit of the scrambler, so as to obtain the indication information.

An embodiment of the present invention further provides a system for transmitting data that carries indication information, including the multiple transmit end nodes and one receive end node.

The receive end node may receive indication frames sent by the multiple transmit end nodes. Specifically, the receive end node may receive indication frames simultaneously sent by the multiple transmit end nodes.

FIG. 20 is a schematic structural diagram of Embodiment 3 of a transmit end node according to the present invention. As shown in FIG. 20, the transmit end node includes a generation module 2001 and a sending module 2002.

The generation module 2001 is configured to generate an indication frame, where the indication frame carries a receiver address, a basic service set identifier BSSID, and a flag bit, and the flag bit is used to identify information about a location that is of the BSSID and that is in the indication frame.

The sending module 2002 is configured to send the indication frame to a receive end node.

The transmit end node is configured to execute the method embodiment corresponding to FIG. 14, and implementation principles and technical effects thereof are similar, and details are not described herein.

In another implementation, the generation module 2001 is specifically configured to: if a receiver address of an original indication frame is the BSSID, set a value of a flag bit in the original indication frame to a first value, so as to generate the indication frame; or if a receiver address of an original indication frame is not the BSSID, set a value of a flag bit in the original indication frame to a second value, and add the BSSID to the original indication frame, so as to generate the indication frame.

On the basis of the foregoing embodiment, the indication frame is a clear to send CTS frame. Correspondingly, the flag bit is a bit in a receiver address field in the CTS frame, or the flag bit is at least one bit in a frame control field in the CTS frame.

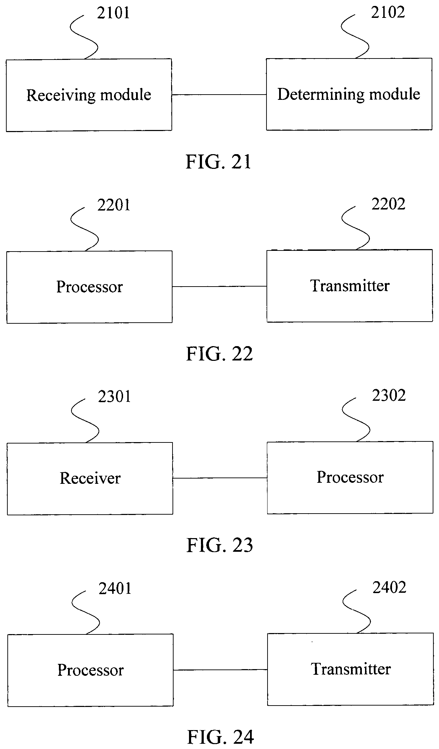

FIG. 21 is a schematic structural diagram of Embodiment 2 of a receive end node according to the present invention. As shown in FIG. 21, the receive end node includes a receiving module 2101 and a determining module 2102.

The receiving module 2101 is configured to receive an indication frame sent by a transmit end node, where the indication frame carries a receiver address, a BSSID, and a flag bit, and the flag bit is used to identify information about a location that is of the BSSID and that is in the indication frame.

The determining module 2102 is configured to determine, according to the receiver address, whether the receiver address of the indication frame is the same as an address of the receive end node, and if not, determine, according to the BSSID, whether the receive end node stops data transmission in a preset time period indicated in the indication frame.

The receive end node is configured to execute the method embodiment corresponding to FIG. 16, and implementation principles and technical effects thereof are similar, and details are not described herein.

In another implementation, the determining module 2102 is specifically configured to determine, according to the BSSID, whether the receive end node and the transmit end node belong to a same BSS, where if yes, it is determined that the receive end node stops data transmission in the preset time period indicated in the indication frame, or if not, it is determined that the receive end node may continue data transmission.

That the flag bit is used to identify information about a location that is of the BSSID and that is in the indication frame includes: when the flag bit is a first value, identifying that the receiver address of the indication frame is the BSSID; or when the flag bit is a second value, identifying that the receiver address of the indication frame is not the BSSID.

When the flag bit is the second value, it is identified that the indication frame includes a BSSID field, and the BSSID field includes the BSSID.

In another implementation, the flag bit is the first bit in a receiver address field in the indication frame. Correspondingly, the determining module 2102 is specifically configured to: if a value of the first bit is the first value, convert the value of the first bit in the receiver address in the indication frame into the second value, and determine whether a receiver address obtained after the conversion is the same as the address of the receive end node; or if a value of the first bit is the second value, determine whether the receiver address of the indication frame is the same as the address of the receive end node.

In another implementation, the flag bit is at least one bit in a frame control field in the indication frame; and the determining module 2102 is specifically configured to determine whether the receiver address of the indication frame is the same as the address of the receive end node.

On the basis of the foregoing embodiment, the indication frame may be a CTS frame.

FIG. 22 is a schematic structural diagram of Embodiment 4 of a transmit end node according to the present invention. As shown in FIG. 22, the transmit end node includes a processor 2201 and a transmitter 2202.

The processor 2201 is configured to generate an indication frame.

The transmitter 2202 is configured to send the indication frame to a receive end node.

The indication frame includes available-channel indication information or idle bandwidth information.

The transmit end node is configured to execute the method embodiment corresponding to FIG. 4, and implementation principles and technical effects thereof are similar, and details are not described herein.

In another implementation, the processor 2201 is specifically configured to set a value of the first bit of the indication frame, where the value of the first bit is used to identify the available-channel indication information or the idle bandwidth information.

Specifically, that the value of the first bit is used to identify the available-channel indication information is specifically: when the value of the first bit is a first value, identifying that a primary channel of the transmit end node is idle, and all secondary channels are busy; or when the value of the first bit is a second value, identifying that a primary channel of the transmit end node is idle, and at least one secondary channel is idle.

In another implementation, the processor 2201 is configured to scramble the indication frame by using a scrambler.

When the value of the first bit is the first value, all initial state bits of the scrambler are random values; or when the value of the first bit is the second value, at least one of initial state bits of the scrambler is used to identify whether a corresponding secondary channel is idle.

In another implementation, that the value of the first bit is used to identify the idle bandwidth information includes:
when the value of the first bit is a first value, identifying that the indication frame does not carry the idle bandwidth information; or when the value of the first bit is a second value, identifying that the indication frame carries the idle bandwidth information. Likewise, the processor 2201 is further configured to scramble the indication frame by using a scrambler. When the value of the first bit is the first value, all initial state bits of the scrambler are random values; or when the value of the first bit is the second value, at least one of initial state bits of the scrambler is used to identify a corresponding idle bandwidth type.

On the basis of the foregoing embodiment, the indication frame is a clear to send CTS frame. Correspondingly, the first bit is a bit in a receiver address field in the CTS frame, or the first bit is at least one bit in a frame control field in the CTS frame; or the indication frame is a media access control MAC frame, and correspondingly, the first bit is a bit in the MAC frame.

In another implementation, the indication frame includes an indication field, and the indication field includes multiple bits. Correspondingly, the processor 2201 is specifically configured to: set values of the multiple bits, and identify different available-channel indication information by using the values of the multiple bits, or identify different idle bandwidth information by using the values of the multiple bits. Likewise, in this implementation, the processor 2201 also needs to scramble the indication frame.

FIG. 23 is a schematic structural diagram of Embodiment 3 of a receive end node according to the present invention. As shown in FIG. 23, the receive end node includes a receiver 2301 and a processor 2302.

The receiver 2301 is configured to receive indication frames sent by multiple transmit end nodes. The processor 2302 is configured to obtain indication information according to the indication frame.

The indication information includes available-channel indication information or idle bandwidth information.

The receive end node is configured to execute the method embodiment corresponding to FIG. 10, and implementation principles and technical effects thereof are similar, and details are not described herein.

In another implementation, the processor 2302 is specifically configured to obtain a value of the first bit in the indication frame according to the indication frame, where the value of the first bit is used to identify the available-channel indication information or the idle bandwidth information. Further, that the value of the first bit is used to identify the available-channel indication information includes: when the value of the first bit is a first value, identifying that a primary channel of the transmit end node is idle, and all secondary channels are busy; or when the value of the first bit is a second value, identifying that a primary channel of the transmit end node is idle, and at least one secondary channel is idle.

Correspondingly, the processor 2302 is specifically configured to: obtain an initial state bit of a scrambler according to a scrambling code of the indication frame, and descramble, by using a descrambler, the indication frame according to the initial state bit of the scrambler, so as to obtain the indication information. When the value of the first bit is the first value, all initial state bits of the scrambler are random values; or when the value of the first bit is the second value, at least one of initial state bits of the scrambler is used to identify whether a corresponding secondary channel is idle.

In another implementation, that the value of the first bit is used to identify the idle bandwidth information includes: when the value of the first bit is a first value, identifying that the indication frame does not carry the idle bandwidth information; or when the value of the first bit is a second value, identifying that the indication frame carries the idle bandwidth information. Correspondingly, the processor 2302 is specifically configured to: obtain an initial state bit of a scrambler according to a scrambling code of the indication frame, and descramble, by using a descrambler, the indication frame according to the initial state bit of the scrambler, so as to obtain the indication information. When the value of the first bit is the first value, all initial state bits of the scrambler are random values; or when the value of the first bit is the second value, at least one of initial state bits of the scrambler is used to identify a corresponding idle bandwidth type.

The indication frame is a clear to send CTS frame. Correspondingly, the first bit is a bit in a receiver address field in the CTS frame, or the first bit is at least one bit in a frame control field in the CTS frame; or the indication frame is a media access control MAC frame, and correspondingly, the first bit is a bit in the MAC frame.

In another embodiment, the indication frame includes an indication field, and the indication field includes multiple bits, where values of the multiple bits identify different available-channel indication information, or values of the multiple bits identify different idle bandwidth information. Correspondingly, the processor 2302 is specifically configured to: obtain an initial state bit of a scrambler according to a scrambling code of the indication frame, and descramble, by using a descrambler, the indication frame according to the initial state bit of the scrambler, so as to obtain the indication information.

An embodiment of the present invention further provides a system for transmitting data that carries indication information, including the multiple transmit end nodes shown in FIG. 22 and one receive end node shown in FIG. 23.

The receive end node may receive indication frames sent by the multiple transmit end nodes. Specifically, the receive end node may receive indication frames simultaneously sent by the multiple transmit end nodes.

FIG. 24 is a schematic structural diagram of Embodiment 5 of a transmit end node according to the present invention. As shown in FIG. 24, the receive end node includes a processor 2401 and a transmitter 2402.

The processor 2401 is configured to generate an indication frame, where the indication frame carries a receiver address, a basic service set identifier BSSID, and a flag bit, and the flag bit is used to identify information about a location that is of the BSSID and that is in the indication frame. The transmitter 2402 is configured to send the indication frame to a receive end node.

The transmit end node is configured to execute the method embodiment corresponding to FIG. 14, and implementation principles and technical effects thereof are similar, and details are not described herein.

In another implementation, the processor 2401 is specifically configured to: if a receiver address of an original indication frame is the BSSID, set a value of a flag bit in the original indication frame to a first value, so as to generate the indication frame; or if a receiver address of an original indication frame is not the BSSID, set a value of a flag bit in the original indication frame to a second value, and add the BSSID to the original indication frame, so as to generate the indication frame.

On the basis of the foregoing embodiment, the indication frame is a clear to send CTS frame. Correspondingly, the flag bit is a bit in a receiver address field in the CTS frame, or the flag bit is at least one bit in a frame control field in the CTS frame.

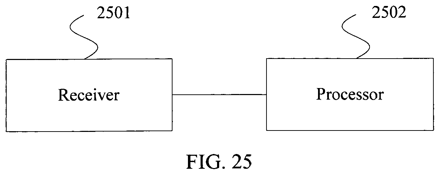

FIG. 25 is a schematic structural diagram of Embodiment 4 of a receive end node according to the present invention. As shown in FIG. 25, the receive end node includes a receiver 2501 and a processor 2502.

The receiver 2501 is configured to receive an indication frame sent by a transmit end node, where the indication frame carries a receiver address, a BSSID, and a flag bit, and the flag bit is used to identify information about a location that is of the BSSID and that is in the indication frame.

The processor 2502 is configured to determine, according to the receiver address, whether the receiver address of the indication frame is the same as an address of the receive end node, and if not, determine, according to the BSSID, whether the receive end node stops data transmission in a preset time period indicated in the indication frame.

The receive end node is configured to execute the method embodiment corresponding to FIG. 16, and implementation principles and technical effects thereof are similar, and details are not described herein.

In another implementation, the processor 2502 is specifically configured to determine, according to the BSSID, whether the receive end node and the transmit end node belong to a same BSS, where if yes, it is determined that the receive end node stops data transmission in the preset time period indicated in the indication frame, or if not, it is determined that the receive end node may continue data transmission.

That the flag bit is used to identify information about a location that is of the BSSID and that is in the indication frame includes: when the flag bit is a first value, identifying that the receiver address of the indication frame is the BSSID; or when the flag bit is a second value, identifying that the receiver address of the indication frame is not the BSSID.

When the flag bit is the second value, it is identified that the indication frame includes a BSSID field, and the BSSID field includes the BSSID.

In another implementation, the flag bit is the first bit in a receiver address field in the indication frame. Correspondingly, the processor 2502 is specifically configured to: if a value of the first bit is the first value, convert the value of the first bit in the receiver address in the indication frame into the second value, and determine whether a receiver address obtained after the conversion is the same as the address of the receive end node; or if a value of the first bit is the second value, determine whether the receiver address of the indication frame is the same as the address of the receive end node.

In another implementation, the flag bit is at least one bit in a frame control field in the indication frame. Correspondingly, the processor 2502 is specifically configured to determine whether the receiver address of the indication frame is the same as the address of the receive end node.

On the basis of the foregoing embodiment, the indication frame may be a CTS frame.

## Claims

1. A method for transmitting data in a wireless local area network, comprising:
generating (S101), by a transmit end node, a medium access control, MAC, frame; and
sending (S102), by the transmit end node, the MAC frame to a receive end node;
wherein the MAC frame comprises an indication field, and the indication field comprises multiple bits;
wherein one bit of the multiple bits indicates whether one 20MHz channel corresponding to the one bit is available;
wherein the MAC frame further comprises a receiver address, a basic service set identifier BSSID, and a flag bit, and the flag bit is used to identify information about a location that is of the BSSID and that is in the MAC frame;
wherein a value of the flag bit is a first value, indicating that a receiver address of the MAC frame is the BSSID, or a value of the flag bit is a second value, indicating that a receiver address of the MAC frame is not the BSSID; and
wherein before sending the MAC frame to a receive end node, the transmit end node is further configured to scramble the MAC frame by using a scrambler.

2. The method according to claim 1, the number of the multiple bits is 8 bits.

3. The method according to claim 1 or 2, wherein a value "1" of a bit of the multiple bits indicates that a channel corresponding to the bit is available.

4. The method according to any one of claims 1 to 3, a generator polynomial of the scrambler is G(X) = X⁷ + X⁴ + 1, wherein X¹ and X⁷ represent first bit and seven bit of the scrambler.

5. A method for receiving data in a wireless local area network, comprising:
receiving (S201), by a receive end node, a medium access control, MAC, frame;
wherein the MAC frame comprises an indication field, and the indication field comprises multiple bits;
wherein one bit of the multiple bits indicates whether one 20MHz channel corresponding to the one bit is available;
wherein the MAC frame further comprises a receiver address, a basic service set identifier BSSID, and a flag bit, and the flag bit is used to identify information about a location that is of the BSSID and that is in the MAC frame;
wherein a value of the flag bit is a first value, indicating that a receiver address of the MAC frame is the BSSID, or a value of the flag bit is a second value, indicating that a receiver address of the MAC frame is not the BSSID; and
obtaining (S202), by the receive end node, the indication field according to the MAC frame, wherein the receive end node is specifically configured to obtain an initial state bit of a scrambler according to a scrambling code of the MAC frame, and descramble the MAC frame by using a descrambler according to the initial state bit of the scrambler, to obtain the indication field.

6. The method according to claim 5, the number of the multiple bits is 8 bits.

7. The method according to claim 5 or 6, wherein a value "1" of a bit of the multiple bits indicates that a channel corresponding to the bit is available.

8. The method according to any one of claims 5 to 7, a generator polynomial of the scrambler is G(X) = X7 + X4 + 1, wherein X1 and X7 represent first bit and seven bit of the scrambler.

9. A transmit end node for transmitting data in a wireless local area network, comprising a processor (2201) and a transmitter (2202);
the processor (2201) is configured to generate an indication medium access control, MAC, frame; and
the transmitter (2202) is configured to send the MAC frame to a receive end node;
wherein the MAC frame comprises an indication field, and the indication field comprises multiple bits;
wherein one bit of the multiple bits indicates whether one 20MHz channel corresponding to the one bit is available;
wherein the MAC frame further comprises a receiver address, a basic service set identifier BSSID, and a flag bit, and the flag bit is used to identify information about a location that is of the BSSID and that is in the MAC frame;
wherein a value of the flag bit is a first value, indicating that a receiver address of the MAC frame is the BSSID, or a value of the flag bit is a second value, indicating that a receiver address of the MAC frame is not the BSSID; and
wherein before sending the MAC frame to a receive end node, the processor (2201) is further configured to scramble the MAC frame by using a scrambler.

10. A receive end node for receiving data in a wireless local area network, comprising receiver (2301) and processor (2302);
the receiver (2301) is configured to receive a medium access control, MAC, frame; wherein the MAC frame comprises an indication field, and the indication field comprises multiple bits;
wherein one bit of the multiple bits indicates whether one 20MHz channel corresponding to the one bit is available;
wherein the MAC frame further comprises a receiver address, a basic service set identifier BSSID, and a flag bit, and the flag bit is used to identify information about a location that is of the BSSID and that is in the MAC frame;
wherein a value of the flag bit is a first value, indicating that a receiver address of the MAC frame is the BSSID, or a value of the flag bit is a second value, indicating that a receiver address of the MAC frame is not the BSSID; and
the processor (2302) is further configured to obtain the indication field according to the MAC frame, wherein the processor (2302) is specifically configured to obtain an initial state bit of a scrambler according to a scrambling code of the MAC frame, and descramble the MAC frame by using a descrambler according to the initial state bit of the scrambler, to obtain the indication field.

11. The end node according to claim 9 or 10, the number of the multiple bits is 8 bits.

12. The end node according to any one of claims 9 to 11, wherein a value "1" of a bit of the multiple bits indicates that a channel corresponding to the bit is available.

13. A computer-readable storage medium comprising instructions which, when executed by an end node according to claim 9 or 10, cause the computer to carry out the method of any one of claims 1 to 4 or any one of claims 5 to 8.

## Patentansprüche

1. Verfahren zur Übertragung von Daten in einem drahtlosen Local Area Network, umfassend:
Generieren (S101) eines Medium-Access-Control-Rahmens (MAC-Rahmen) durch einen Übertragungs-Endknoten; und
Senden (S102) des MAC-Rahmens an einen Empfangs-Endknoten durch den Übertragungs-Endknoten;
wobei der MAC-Rahmen ein Anzeigefeld umfasst und das Anzeigefeld mehrere Bits umfasst;
wobei ein Bit der mehreren Bits anzeigt, ob ein dem einen Bit entsprechender 20-MHz-Kanal verfügbar ist;
wobei der MAC-Rahmen ferner eine Empfängeradresse, einen Basic Service Set Identifier BSSID und ein Flag-Bit umfasst, und das Flag-Bit verwendet wird, um Informationen über einen Ort anzugebenen, an dem sich der BSSID befindet und der sich im MAC-Rahmen befindet;
wobei ein Wert des Flag-Bits ein erster Wert ist, der anzeigt, dass eine Empfängeradresse des MAC-Rahmens der BSSID ist, oder ein Wert des Flag-Bits ein zweiter Wert ist, der anzeigt, dass eine Empfängeradresse des MAC-Rahmens nicht der BSSID ist; und wobei der Übertragungs-Endknoten ferner dazu konfiguriert ist, vor dem Senden des MAC-Rahmens an einen Empfangs-Endknoten den MAC-Rahmen unter Verwendung eines Scramblers zu verwürfeln.

2. Verfahren nach Anspruch 1, wobei die Anzahl der mehreren Bits 8 Bits ist.

3. Verfahren nach Anspruch 1 oder 2, wobei ein Wert "1" eines Bits der mehreren Bits anzeigt, dass ein dem Bit entsprechender Kanal verfügbar ist.

4. Verfahren nach einem der Ansprüche 1 bis 3, wobei ein Generatorpolynom des Scramblers G(X) = X⁷ + X⁴ + 1 ist, wobei X¹ und X⁷ für das erste Bit und das siebte Bit des Scramblers stehen.

5. Verfahren zum Empfangen von Daten in einem drahtlosen Local Area Network, umfassend:
Empfangen (S201) eines Medium-Access-Control-Rahmens (MAC-Rahmen);
durch einen Empfangs-Endknoten; wobei der MAC-Rahmen ein Anzeigefeld umfasst und das Anzeigefeld mehrere Bits umfasst;
wobei ein Bit der mehreren Bits anzeigt, ob ein dem einen Bit entsprechender 20-MHz-Kanal verfügbar ist;
wobei der MAC-Rahmen ferner eine Empfängeradresse, einen Basic Service Set Identifier BSSID und ein Flag-Bit umfasst, und das Flag-Bit verwendet wird, um Informationen über einen Ort anzugebenen, an dem sich der BSSID befindet und der sich im MAC-Rahmen befindet;
wobei ein Wert des Flag-Bits ein erster Wert ist, der anzeigt, dass eine Empfängeradresse des MAC-Rahmens der BSSID ist, oder ein Wert des Flag-Bits ein zweiter Wert ist, der anzeigt, dass eine Empfängeradresse des MAC-Rahmens nicht der BSSID ist; und Erhalten (S202) des Anzeigefeldes gemäß dem MAC-Rahmen durch den Empfangs-Endknoten, wobei der Empfangs-Endknoten speziell dazu konfiguriert ist, ein Anfangszustandsbit eines Scramblers gemäß einem Scrambling-Code des MAC-Rahmens zu erhalten und den MAC-Rahmen unter Verwendung eines Descramblers gemäß dem Anfangszustandsbit des Scramblers zu entwürfeln, um das Anzeigefeld zu erhalten.

6. Verfahren nach Anspruch 5, wobei die Anzahl der mehreren Bits 8 Bits ist.

7. Verfahren nach Anspruch 5 oder 6, wobei ein Wert "1" eines Bits der mehreren Bits anzeigt, dass ein dem Bit entsprechender Kanal verfügbar ist.

8. Verfahren nach einem der Ansprüche 5 bis 7, wobei ein Generatorpolynom des Scramblers G(X) = X7 + X4 + 1 ist, wobei X1 und X7 für das erste Bit und das siebte Bit des Scramblers stehen.

9. Übertragungs-Endknoten zur Übertragung von Daten in einem drahtlosen Local Area Network, einen Prozessor (2201) und einen Sender (2202) umfassend;
der Prozessor (2201) ist dazu konfiguriert, einen Anzeige-Medium-Access-Control-Rahmens (MAC-Rahmen) zu generieren; und der Sender (2202) ist dazu konfiguriert, den MAC-Rahmen an einen Empfangs-Endknoten zu senden;
wobei der MAC-Rahmen ein Anzeigefeld umfasst und das Anzeigefeld mehrere Bits umfasst;
wobei ein Bit der mehreren Bits anzeigt, ob ein dem einen Bit entsprechender 20-MHz-Kanal verfügbar ist;
wobei der MAC-Rahmen ferner eine Empfängeradresse, einen Basic Service Set Identifier BSSID und ein Flag-Bit umfasst, und das Flag-Bit verwendet wird, um Informationen über einen Ort anzugebenen, an dem sich der BSSID befindet und der sich im MAC-Rahmen befindet;
wobei ein Wert des Flag-Bits ein erster Wert ist, der anzeigt, dass eine Empfängeradresse des MAC-Rahmens der BSSID ist, oder ein Wert des Flag-Bits ein zweiter Wert ist, der anzeigt, dass eine Empfängeradresse des MAC-Rahmens nicht der BSSID ist; und wobei der Prozessor (2201) ferner dazu konfiguriert ist, vor dem Senden des MAC-Rahmens an einen Empfangs-Endknoten den MAC-Rahmen unter Verwendung eines Scramblers zu verwürfeln.

10. Empfangs-Endknoten zum Empfangen von Daten in einem drahtlosen Local Area Network, einen Empfänger (2301) und einen Prozessor (2302) umfassend;
der Empfänger (2301) ist dazu konfiguriert, einen Medium-Access-Control-Rahmens (MAC-Rahmen) zu empfangen;
wobei der MAC-Rahmen ein Anzeigefeld umfasst und das Anzeigefeld mehrere Bits umfasst;
wobei ein Bit der mehreren Bits anzeigt, ob ein dem einen Bit entsprechender 20-MHz-Kanal verfügbar ist;
wobei der MAC-Rahmen ferner eine Empfängeradresse, einen Basic Service Set Identifier BSSID und ein Flag-Bit umfasst, und das Flag-Bit verwendet wird, um Informationen über einen Ort anzugebenen, an dem sich der BSSID befindet und der sich im MAC-Rahmen befindet;
wobei ein Wert des Flag-Bits ein erster Wert ist, der anzeigt, dass eine Empfängeradresse des MAC-Rahmens der BSSID ist, oder ein Wert des Flag-Bits ein zweiter Wert ist, der anzeigt, dass eine Empfängeradresse des MAC-Rahmens nicht der BSSID ist; und der Prozessor (2302) ist ferner dazu konfiguriert, das Anzeigefeld gemäß dem MAC-Rahmen zu erhalten, wobei der Prozessor (2302) speziell dazu konfiguriert ist, ein Anfangszustandsbit eines Scramblers gemäß einem Scrambling-Code des MAC-Rahmens zu erhalten und den MAC-Rahmen unter Verwendung eines Descramblers gemäß dem Anfangszustandsbit des Scramblers zu entwürfeln, um das Anzeigefeld zu erhalten.

11. Endknoten nach Anspruch 9 oder 10, wobei die Anzahl der mehreren Bits 8 Bits ist.

12. Endknoten nach einem der Ansprüche 9 bis 11, wobei ein Wert "1" eines Bits der mehreren Bits anzeigt, dass ein dem Bit entsprechender Kanal verfügbar ist.

13. Computerlesbares Speichermedium, Anweisungen umfassend, die, wenn sie von einem Endknoten nach Anspruch 9 oder 10 ausgeführt werden, den Computer veranlassen, das Verfahren nach einem der Ansprüche 1 bis 4 oder einem der Ansprüche 5 bis 8 auszuführen.

## Revendications

1. Procédé pour transmettre des données dans un réseau local sans fil, comprenant :
la génération (S101), par un noeud d'extrémité de transmission, d'une trame de commande d'accès au support, MAC ; et
l'envoi (S102), par le noeud d'extrémité de transmission, de la trame MAC à un noeud d'extrémité de réception,
dans lequel la trame MAC comprend un champ d'indication, et le champ d'indication comprend de multiples bits ;
dans lequel un bit des multiples bits indique si un canal de 20 MHz correspondant au bit est disponible ;
dans lequel la trame MAC comprend en outre une adresse de récepteur, un identificateur d'ensemble de services de base BSSID et un bit indicateur, et le bit indicateur est utilisé pour identifier des informations concernant un emplacement du BSSID et qui est dans la trame MAC ;
dans lequel une valeur du bit indicateur est une première valeur, indiquant qu'une adresse de récepteur de la trame MAC est le BSSID, ou une valeur du bit indicateur est une seconde valeur, indiquant qu'une adresse de récepteur de la trame MAC n'est pas le BSSID ; et
dans lequel avant d'envoyer la trame MAC à un noeud d'extrémité de réception, le noeud d'extrémité de transmission est en outre configuré pour brouiller la trame MAC en utilisant un brouilleur.

2. Procédé selon la revendication 1, le nombre des multiples bits est de 8 bits.

3. Procédé selon la revendication 1 ou 2, dans lequel une valeur « 1 » d'un bit des multiples bits indique qu'un canal correspondant au bit est disponible.

4. Procédé selon l'une quelconque des revendications 1 à 3, un polynôme générateur de l'embrouilleur est G(X) = X⁷ + X⁴ + 1, où X¹ et X⁷ représentent le premier bit et le septième bit de l'embrouilleur.

5. Procédé de réception de données dans un réseau local sans fil, comprenant :
la réception (S201), par un noeud d'extrémité de réception, d'une trame de commande d'accès au support, MAC ;
dans lequel la trame MAC comprend un champ d'indication, et le champ d'indication comprend de multiples bits ;
dans lequel un bit des multiples bits indique si un canal de 20 MHz correspondant au bit est disponible ;
dans lequel la trame MAC comprend en outre une adresse de récepteur, un identificateur d'ensemble de services de base BSSID et un bit indicateur, et le bit indicateur est utilisé pour identifier des informations concernant un emplacement du BSSID et qui est dans la trame MAC ;
dans lequel une valeur du bit indicateur est une première valeur, indiquant qu'une adresse de récepteur de la trame MAC est le BSSID, ou une valeur du bit indicateur est une seconde valeur, indiquant qu'une adresse de récepteur de la trame MAC n'est pas le BSSID ; et
l'obtention (S202), par le noeud d'extrémité de réception, du champ d'indication en fonction de la trame MAC, dans lequel le noeud d'extrémité de réception est spécifiquement configuré pour obtenir un bit d'état initial d'un embrouilleur en fonction d'un code d'embrouillage de la trame MAC, et désembrouiller la trame MAC en utilisant un désembrouilleur en fonction du bit d'état initial de l'embrouilleur, pour obtenir le champ d'indication.

6. Procédé selon la revendication 5, le nombre des multiples bits est de 8 bits.

7. Procédé selon la revendication 5 ou 6, dans lequel une valeur « 1 » d'un bit des multiples bits indique qu'un canal correspondant au bit est disponible.

8. Procédé selon l'une quelconque des revendications 5 à 7, un polynôme générateur de l'embrouilleur est G(X) = X7 + X4 + 1, où X1 et X7 représentent le premier bit et le septième bit de l'embrouilleur.

9. Noeud d'extrémité de transmission pour la transmission de données dans un réseau local sans fil, comprenant un processeur (2201) et un transmetteur (2202) ;
le processeur (2201) est configuré pour générer une trame de commande d'accès au support d'indication, MAC ; et
le transmetteur (2202) est configuré pour envoyer la trame MAC à un noeud d'extrémité de réception ;
dans lequel la trame MAC comprend un champ d'indication, et le champ d'indication comprend de multiples bits ;
dans lequel un bit des multiples bits indique si un canal de 20 MHz correspondant au bit est disponible ;
dans lequel la trame MAC comprend en outre une adresse de récepteur, un identificateur d'ensemble de services de base BSSID et un bit indicateur, et le bit indicateur est utilisé pour identifier des informations concernant un emplacement du BSSID et qui est dans la trame MAC ;
dans lequel une valeur du bit indicateur est une première valeur, indiquant qu'une adresse de récepteur de la trame MAC est le BSSID, ou une valeur du bit indicateur est une seconde valeur, indiquant qu'une adresse de récepteur de la trame MAC n'est pas le BSSID ; et
dans lequel avant d'envoyer la trame MAC à un noeud d'extrémité de réception, le processeur (2201) est en outre configuré pour brouiller la trame MAC en utilisant un embrouilleur.

10. Noeud d'extrémité de réception pour recevoir des données dans un réseau local sans fil, comprenant un récepteur (2301) et un processeur (2302) ;
le récepteur (2301) est configuré pour recevoir une trame de commande d'accès au support, MAC ;
dans lequel la trame MAC comprend un champ d'indication, et le champ d'indication comprend de multiples bits ;
dans lequel un bit des multiples bits indique si un canal de 20 MHz correspondant au bit est disponible ;
dans lequel la trame MAC comprend en outre une adresse de récepteur, un identificateur d'ensemble de services de base BSSID et un bit indicateur, et le bit indicateur est utilisé pour identifier des informations concernant un emplacement du BSSID et qui est dans la trame MAC ;
dans lequel une valeur du bit indicateur est une première valeur, indiquant qu'une adresse de récepteur de la trame MAC est le BSSID, ou une valeur du bit indicateur est une seconde valeur, indiquant qu'une adresse de récepteur de la trame MAC n'est pas le BSSID ; et
le processeur (2302) est en outre configuré pour obtenir le champ d'indication en fonction de la trame MAC, dans lequel le processeur (2302) est spécifiquement configuré pour obtenir un bit d'état initial d'un embrouilleur en fonction d'un code d'embrouillage de la trame MAC, et désembrouiller la trame MAC en utilisant un désembrouilleur en fonction du bit d'état initial de l'embrouilleur, pour obtenir le champ d'indication.

11. Noeud d'extrémité selon la revendication 9 ou 10, le nombre des multiples bits est de 8 bits.

12. Noeud d'extrémité selon l'une quelconque des revendications 9 à 11, dans lequel une valeur « 1 » d'un bit des multiples bits indique qu'un canal correspondant au bit est disponible.

13. Support de stockage lisible par ordinateur comprenant des instructions qui, lorsqu'elles sont exécutées par un noeud d'extrémité selon la revendication 9 ou 10, amènent l'ordinateur à mettre en œuvre le procédé selon l'une quelconque des revendications 1 à 4 ou l'une quelconque des revendications 5 à 8.
